# FASCICULE DE BREVET EUROPEEN

(11) **EP 1 003 263 B1**
(45) Date de publication et mention de la délivrance du brevet: **24.03.2010**
(21) Numéro de dépôt: 99410135.0
(22) Date de dépôt: 15.10.1999
(51) Int. Cl.: H02H 3/33

(54) **Dispositif de protection différentielle**
Differentialschutz
Differential protection device

(30) Priorité: 18.11.1998 FR 9814681
(43) Date de publication de la demande: 24.05.2000
(73) Titulaire: Schneider Electric Industries SAS, 92500 Rueil-Malmaison (FR)
(72) Inventeur: Beranger, Bruno, 38050 Grenoble cedex 09 (FR); Tian, Simon, 38050 Grenoble cedex 09 (FR)
(74) Mandataire: Tripodi, Paul

(56) Documents cités:
- FR-A- 2 538 179

## Description

L'invention concerne un dispositif de protection différentielle comportant :
- des moyens de mesure de courant différentiel pour fournir un signal représentatif d'un courant différentiel circulant dans des conducteurs d'un réseau électrique,
- une unité de traitement connectée aux moyens de mesure et fournissant un signal de déclenchement lorsqu'un courant différentiel dépasse un seuil prédéterminé, et
- des moyens actionneurs connectés à l'unité de traitement pour recevoir un signal de déclenchement,

Les dispositifs de protection différentielle sont généralement utilisés pour surveiller ou protéger des charges ou des parties d'une installation électrique contre des fuites de courant vers la terre ou une masse de l'installation. Ce courant de fuite se manifeste notamment par un courant différentiel ou homopolaire dans des conducteurs principaux d'alimentation.

Dans des dispositifs de protection différentielle connus tels que des relais, des disjoncteurs ou des interrupteurs différentiels, le courant différentiel est détecté par des dispositifs qui déterminent la somme vectorielle des courants circulant dans les conducteurs principaux d'alimentation. De manière connue, les dispositifs de détermination de courant différentiel comportent des tores ayant un circuit magnétique qui entoure lesdits conducteurs principaux. Les tores comportent un enroulement secondaire fournissant un signal représentatif du courant différentiel. Ce signal est généralement appliqué à des actionneurs, tels que notamment des relais de déclenchement, des relais de signalisation, des circuits de traitement ou, par exemple, des dispositifs de visualisation .

Si un courant différentiel dépasse par exemple un seuil prédéterminé, le dispositif de protection différentielle déclenche l'ouverture des contacts principaux des disjoncteurs ou interrupteurs différentiels, ou signale ce dépassement de seuil. Les fuites de courant produisant un courant différentiel sont généralement en phase avec la tension d'alimentation des conducteurs principaux. Par exemple, lorsque les dispositifs sont utilisés pour la protection des personnes ou pour détecter des défauts d'isolement, les courants de fuite peuvent traverser des charges essentiellement résistives.

Cependant, des charges impédantes autres que des charges résistives peuvent provoquer des courants de fuite entre des conducteurs principaux et la terre ou la masse d'une installation. Par exemple, des appareils électriques peuvent comporter des dispositifs de filtrage connectés entre des conducteurs d'alimentation et un conducteur de mise à la terre. Ces dispositifs de filtrage comportent généralement des inductances et des condensateurs qui génèrent des courants de fuite ayant des déphasages dus aux composantes capacitives ou inductives des impédances qu'ils traversent. Des courants de fuite capacitifs peuvent aussi être générés par des capacités de ligne formées entre les conducteurs principaux et la masse d'une installation.

Lorsque le nombre d'appareils comportant des charges capacitives ou inductives entre les conducteurs de ligne et la terre devient important, le courant de fuite détecté par les dispositifs différentiels augmente et le seuil de déclenchement risque d'être dépassé. Ces courants capacitifs ou inductifs perturbent alors le fonctionnement des dispositifs de déclenchement différentiels en les rendant sensibles à des courants de fuite perturbateurs qui ne sont pas représentatifs de défauts d'isolement. Ces perturbations sont particulièrement fréquentes lorsque le seuil de déclenchement est très bas, par exemple, lorsque le dispositif est utilisé pour la protection des personnes contre les contacts directs.

Certains dispositifs de contrôle d'isolement comportent des moyens pour séparer des composantes réelles et imaginaires. Cependant, de tels dispositifs nécessitent des moyens de traitement important, et des circuits d'injection d'un signal supplémentaires dans le réseau. De plus ces dispositifs de contrôle ne s'appliquent pas aux mêmes utilisations que les dispositifs de protection différentielle.

Un dispositif de protection différentielle selon l'état de la technique est décrit dans le document FR-A-2 538 179.

L'invention a pour but un dispositif de protection différentielle moins sensible à des courants de fuite perturbateurs.

Dans un dispositif selon l'invention, une unité de traitement comporte :
- des premiers moyens de traitement recevant un signal représentatif du courant différentiel et fournissant un signal de déclenchement lorsque l'amplitude dudit courant différentiel dépasse un premier seuil prédéterminé, et
- des seconds moyens de traitement recevant un signal représentatif du courant différentiel et fournissant un signal de déclenchement lorsque la composante résistive du courant différentiel dépasse un second seuil prédéterminé, le second seuil prédéterminé étant inférieur au premier seuil prédéterminé.

Dans un mode de réalisation préférentiel, les premiers moyens de traitement comportent des circuits électroniques pour fonctionner à propre courant, et les seconds moyens de traitement comportent des circuits électroniques pour fonctionner avec une alimentation électrique fournie par un circuit d'alimentation.

De préférence, l'unité de traitement comporte des moyens de sélection connectés entre les premiers et seconds moyens de traitement et les moyens actionneurs pour sélectionner les signaux de déclenchement fournis par lesdits premiers et les seconds moyens de traitement.

Dans un mode de réalisation particulier, les seconds moyens de traitement comportent :
- des premiers moyens de détection synchrone recevant un signal représentatif du courant différentiel et un signal représentatif d'une tension des conducteurs du réseau électrique,
- des premiers moyens intégration connectés aux premiers moyens de détection synchrone, et
- des premiers moyens comparaison connectés aux moyens intégrateurs pour comparer des signaux fournis par les moyens intégrateurs avec au moins une valeur de second seuil prédéterminé.

Avantageusement, les moyens de détection synchrone comportent des moyens de détection de signe pour détecter le signe d'un signal représentatif d'une tension des conducteurs du réseau électrique.

Dans un mode de réalisation préférentiel, les seconds moyens de traitement comportent :
- des seconds moyens de détection synchrone recevant un signal représentatif du courant différentiel et un signal représentatif d'une tension des conducteurs du réseau électrique,
- des seconds moyens intégration connectés aux seconds moyens de détection synchrone, et
- des seconds moyens comparaison connectés aux seconds moyens intégrateurs pour comparer des signaux fournis par les seconds moyens intégrateurs avec au moins une valeur de second seuil prédéterminé.

Avantageusement, les seconds moyens de traitement comportent des moyens de blocage de signal connectés entre des moyens d'intégration et des moyens de comparaison.

De préférence, les premiers et les seconds moyens de détection synchrones fonctionnent alternativement de manière entrelacée selon le signe d'un signal représentatif d'une tension des conducteurs du réseau électrique.

Avantageusement, les seconds moyens de traitement comportent des moyens de contrôle connectés aux premiers et seconds moyens de comparaison et comportant une sortie fournissant un signal de déclenchement lorsque lesdits premiers et seconds moyens de comparaison détectent un dépassement de seuil.

De préférence, les premiers et les seconds moyens de traitement comportent un seuil de déclenchement variable en fonction du déphasage d'un courant de défaut différentiel par rapport à un signal représentatif d'une tension des conducteurs du réseau électrique, le seuil de déclenchement variable pouvant varier entre le second seuil prédéterminé et le premier seuil prédéterminé.

Les avantages et caractéristiques de l'invention ressortiront plus clairement de la description qui va suivre, de modes particuliers de réalisation de l'invention, donnés à titre d'exemples non limitatifs, et représentés aux dessins annexés sur lesquels :
- La figure 1 représente un schéma d'un dispositif de protection différentielle de l'art antérieur ;
- La figure 2 représente un schéma d'un dispositif de protection différentielle selon un premier mode de réalisation de l'invention ;
- La figure 3 représente un schéma d'un dispositif de protection différentielle selon un second mode de réalisation de l'invention ;
- Les figures 4A, 4B, 4C et 5A, 5B, 5C représentent des signaux dans un dispositif selon la figure 3 ;
- La figure 6 représente un diagramme illustrant les zones de déclenchement d'un dispositif de protection différentielle selon un mode de réalisation de l'invention ;
- La figure 7 représente un schéma d'un dispositif de protection différentielle selon un troisième mode de réalisation de l'invention ;
- Les figures 8A, 8B, 8C 8D et 9A, 9B, 9C représentent des signaux dans un dispositif selon la figure 7 ;
- La figure 10 représente une courbe représentative d'un seuil de déclenchement en fonction du déphasage du courant de défaut différentiel dans des dispositifs selon des modes de réalisation de l'invention.

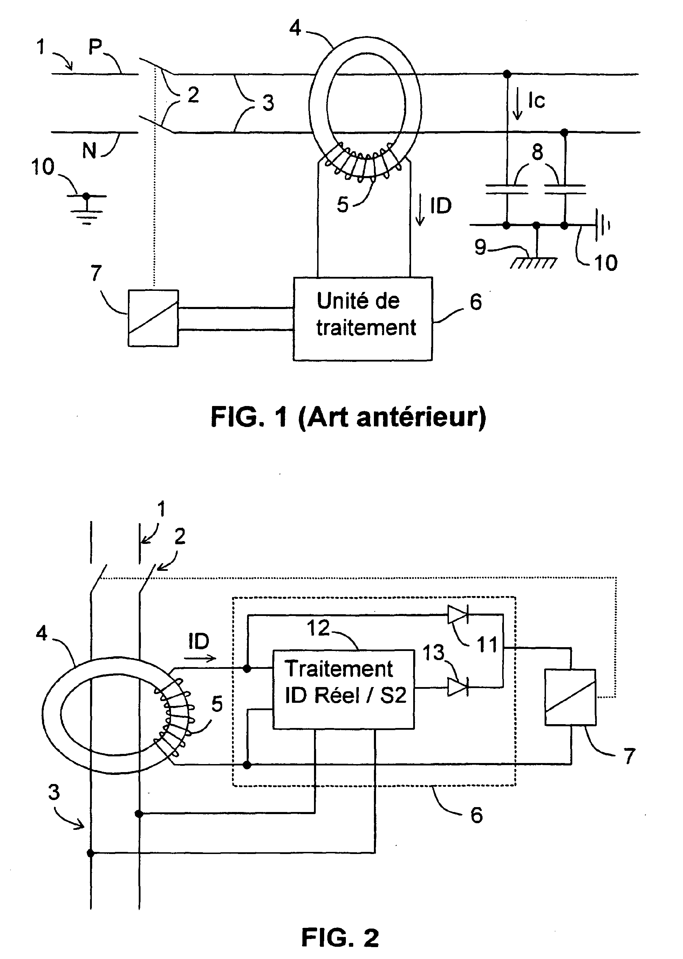

Le schéma de la figure 1 montre un dispositif de protection différentielle de type connu à propre courant installé sur un réseau 1 à protéger. Le dispositif de protection différentielle comporte des contacts principaux 2 pour interrompre le courant dans des conducteurs principaux 3 du réseau. Un transformateur de courant 4 comporte un circuit magnétique qui entoure l'ensemble des conducteurs du réseau. Ce transformateur de courant détecte le courant différentiel circulant dans les conducteurs d'une installation à protéger. Si un défaut apparaît, le transformateur génère dans un enroulement secondaire 5 un courant proportionnel au courant de fuite dans les conducteurs principaux. L'enroulement secondaire 5 est connecté à un circuit électronique 6 de traitement. Ce circuit de traitement commande un relais 7 de déclenchement lorsque le courant secondaire représentatif d'un défaut dépasse un seuil prédéterminé pendant un temps prédéterminé. Le relais 7 de déclenchement provoque l'ouverture des contacts principaux 2.

Dans certaines installations électriques, des charges capacitives 8, notamment des capacités de lignes ou à des condensateurs disposés dans des filtres d'alimentation, peuvent dériver un courant Ic capacitif entre les conducteurs 3 et une masse 9 ou un conducteur de terre 10. Ce courant le est alors détecté comme un courant de fuite par le tore et l'unité de traitement peut déclencher la commande du relais 7 et l'ouverture des contacts 2, même si la fuite ne constitue pas un danger pour l'installation ou les personnes.

Généralement, les courants capacitifs ou inductifs, provoqués notamment par des filtres, ne sont pas représentatifs d'un contact direct par une personne ou d'un défaut d'isolement. Ces courants sont dérivés vers le conducteur de terre ou la masse. De plus, tant que la masse est reliée à la terre, ils ne présentent pas de réels dangers en cas de contacts indirects de la masse par une personne. Les courants résistifs ou les courants en phase ou en opposition de phase avec la tension sont représentatifs d'un défaut d'isolement ou d'un contact direct par une personne. Par conséquent, un dispositif de protection différentielle doit donc être très efficace pour la protection de ce type de défaut.

Pour assurer une protection efficace, sans risque de déclenchement indésirable, un dispositif de protection, selon un mode de réalisation de l'invention, comporte un premier dispositif de traitement fournissant un ordre de déclenchement lorsque l'amplitude du courant différentiel dépasse un premier seuil prédéterminé, et un second dispositif de traitement fournissant un ordre de déclenchement lorsque la composante résistive du courant différentiel dépasse un second seuil prédéterminé, le second seuil étant inférieur au premier seuil.

Dans le mode de réalisation représenté sur la figure 2, l'unité de traitement comporte une première diode 11 connectée entre l'enroulement secondaire 5 du tore 4 et le relais 7 pour réaliser le premier dispositif de traitement. En effet, dans ce cas le premier seuil est effectué par le seuil de déclenchement du relais 7. Ainsi, lorsque le courant ID, fourni par le secondaire du tore 4, dépasse le seuil de basculement ou de déclenchement du relais 7, le dispositif ouvre les contacts 2. Dans ce cas, le relais réagit à l'amplitude du courant quelle que soit la phase du courant par rapport à la tension du réseau. Le seuil du relais représentatif du premier seuil est de préférence élevé. Il correspond, par exemple, à un courant de défaut différentiel sur le réseau de l'ordre de 100 mA ou plus.

Le dispositif de la figure 2 comporte un second dispositif de traitement 12 connecté au secondaire 5 et réagissant à la composante résistive ou réelle du courant différentiel. Ce second dispositif comporte des moyens pour extraire la composante résistive ou réelle du courant de défaut différentiel représenté par le signal ID. La composante résistive est comparée à un second seuil de déclenchement de valeur inférieure au premier seuil. La protection des personnes est alors assurée de façon très efficace, notamment contre les contacts directs. Le second seuil peut être bas, par exemple de l'ordre de 10 mA.

Une sortie du dispositif 12 fournissant un signal de déclenchement est connectée à travers une diode 13 au relais 7 de déclenchement. Ainsi, les diodes 12 et 13 formant une porte "OU" à diodes qui permet le déclenchement si le premier ou le second des dispositifs de traitement fournit un signal de déclenchement. Dans le cas de la figure 2, soit le courant traversant la diode 11 est suffisant pour déclencher le relais, soit un signal fourni par le dispositif 12 traverse la diode 12 pour commander le relais.

Pour extraire la composante résistive, le dispositif 12 comporte une entrée recevant un signal représentatif de la tension du réseau, par exemple, par un signal représentatif de la phase ou du signe de ladite tension.

Sur la figue 3, un dispositif selon un mode de réalisation de l'invention comporte un second dispositif de traitement 12 comportant un amplificateur 14 recevant un signal fourni par l'enroulement secondaire 5 et un détecteur synchrone connecté à une sortie dudit amplificateur. Dans ce mode particulier de réalisation, le détecteur synchrone comporte un interrupteur synchronisé 15 commandé par un dispositif de détection de signe 16 de la tension du réseau 3 de distribution. Le détecteur 16 fournit donc un signal de commande 17 pour commander, en fonction de la phase de la tension du réseau, l'interrupteur 15 et le découpage d'un signal 18 fourni par l'amplificateur 15.

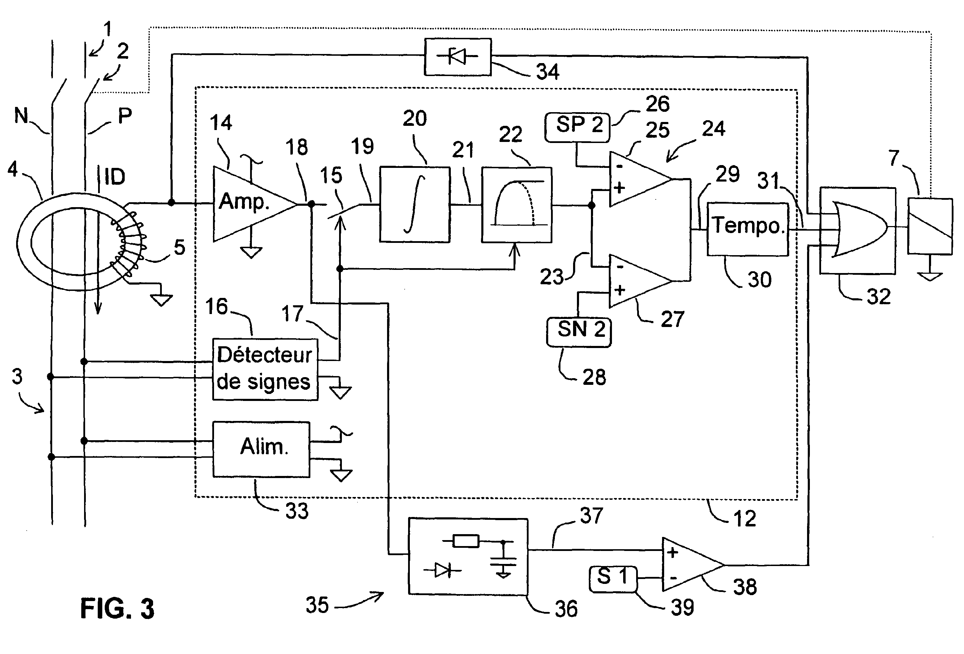

Ensuite, un signal découpé 19 est fourni à un intégrateur 20 qui intègre le signal 19 pendant chaque période de découpage. A la fin de l'intégration, un signal d'intégration 21 est fourni à un bloqueur 22 pour mémoriser un signal 23 représentatif de la valeur de la fin d'intégration. La mémorisation est gardée jusqu'à la prochaine période correspondant à la fin de la prochaine intégration. Les signaux 21 et 23 sont représentatifs de la partie réelle du signal fourni par l'enroulement secondaire 5 et par conséquent de la composante résistive d'un défaut. La valeur mémorisée est appliquée à un dispositif de comparaison 24. Le dispositif 24 de comparaison de la figure 3 permet de comparer les signaux mémorisés positifs et négatifs. Le détecteur synchrone permet de détecter une alternance négative ou positive d'un courant de défaut puisque l'interrupteur est fermé pendant une demi-période de la période correspondant à la fréquence du réseau.

Ainsi, si une alternance positive est détectée, un premier comparateur 25 compare le signal 23 fourni par le bloqueur 22 et l'intégrateur 20 à un second seuil positif 26, et si une alternance négative est détectée, un second comparateur 27 compare le signal 23 à un second seuil négatif 28. Dans ce mode de réalisation, si le signal 23 est positif et s'il dépasse le seuil positif 26, un signal 26 de comparaison passe à l'état haut valide, de même si le signal 23 est négatif et s'il devient inférieur au seuil négatif 28, le signal 29 passe à l'état haut. De préférence, les seconds seuils positif ou négatif, respectivement 26 et 28, ont la même valeur en valeurs absolues. Il est également possible, dans d'autres modes de réalisation, de redresser le signal 23 et de n'utiliser qu'un seul comparateur avec un seul premier seuil, par exemple le premier seuil positif.

Lorsque le signal 29 est activé, un circuit 30 de temporisation connecté au dispositif de comparaison opère une temporisation pour éviter les déclenchements indésirables ou aléatoires. La sortie du circuit de temporisation fournit un signal de déclenchement 31 pour commander le relais 7. Dans le mode de réalisation de la figure 3, le signal de déclenchement 31 passe par un dispositif de sélection 32 qui fonctionne comme une porte "OU". De préférence, le dispositif 32 comporte un "OU" à diodes fonctionnant de la même manière que les diodes 11 et 13.

Le second dispositif de traitement 12 de la figure 3 comporte un circuit d'alimentation 33 pour alimenter des circuits électroniques qui le composent.

Le premier dispositif de traitement, selon le mode de réalisation de la figure 3, comporte un composant 34 à seuil de tension connecté entre l'enroulement 5 et le relais à travers le dispositif de sélection 32. De préférence, le premier dispositif de traitement fonctionne à propre courant sans alimentation. Le seuil de tension du composant 34 participe à la valeur du premier seuil prédéterminé.

Dans un dispositif selon un mode de réalisation représenté sur la figure 3, le premier dispositif de traitement peut comporter un circuit de traitement 35 connecté entre la sortie de l'amplificateur 14 et le relais 7 à travers le dispositif de sélection 32. Le circuit 35 comporte un circuit de prétraitement 36 pouvant comporter un redresseur et un filtre recevant le signal 18 représentatif du courant fourni par le secondaire 5 et fournissant un signal 37 à un comparateur 38. Le comparateur 38 compare le signal 37 à un premier seuil 39 et fournit un signal de déclenchement au relais 7 à travers le dispositif 32. Le circuit de traitement 35 est sensible à un signal représentatif de l'amplitude du courant de défaut.

Le composant 34 et le dispositif 35 peuvent faire partie d'un même premier dispositif de traitement avec des premiers seuils identiques ou différents.

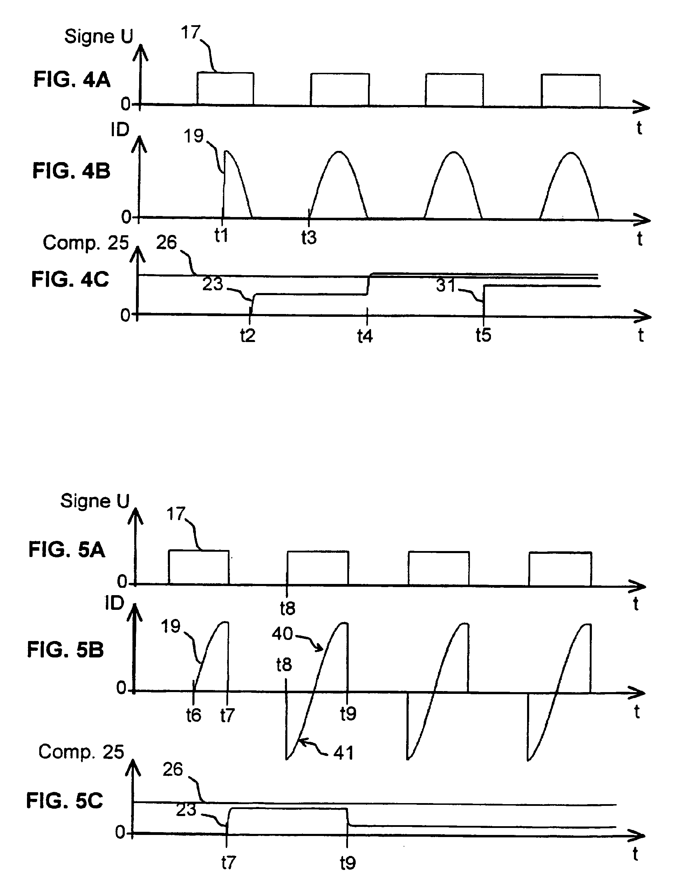

Les figures 4A, 4B et 4C montrent les signaux d'un dispositif de la figure 3 lorsqu'un défaut résistif intervient. La figure 4a illustre le signal de signe 17 changeant de valeur à chaque alternance de la tension du réseau. La figure 4b illustre le signal 19 découpé selon la valeur du signal 17. Dans ce cas, le signal 19 est sensiblement en phase avec le signal 17, donc un courant de défaut est essentiellement résistif. Sur cette figure 4b, un défaut apparaît à un instant tl sensiblement au milieu de la synchronisation. L'intégration de ce signal donne une valeur faible du signal 23 à un instant t2 en fin d'intégration représentée sur la figure 4c. A un instant t3, le défaut persiste et une intégration totale sur une demi-période peut commencer. A la fin de la période d'intégration, à un instant t4, le signal 23 dépasse le second seuil 26 et la temporisation par le circuit 30 est déclenchée. Puis à un instant t5, le défaut n'ayant pas disparu, un signal de déclenchement 31 est envoyé au relais de déclenchement pour provoquer l'ouverture des contacts 2.

Les figures 5A, 5B et 5C montrent les signaux d'un dispositif selon la figure 3 lorsqu'un courant de défaut capacitif intervient. La figure 5A illustre le signal 19 découpé selon la phase du signal 17. Dans ce cas, le signal 19 a une partie positive 40 et une partie négative 41. Ainsi, l'intégration d'un tel signal donne une valeur faible ou nulle si le signal 19 est parfaitement en déphasage de 90° par rapport au signal 17. Dans l'exemple de la figure 5B, le signal est un peu décalé, la partie positive est un peu plus grande que la partie négative. Il comporte donc une forte composante capacitive et une faible composante résistive. La figure 5B montre les signaux 23 et 26 en entrées du comparateur 25.

Dans ce cas de fonctionnement, le signal 19 apparaît à un instant t6 sensiblement au milieu d'un signal 17 de synchronisation. Dans cette première intégration, le signal 19 a sensiblement un quart de période soit une demi-alternance positive. Le signal 23, à la fin de l'intégration, à un instant t7, a une valeur élevée mais inférieure au seuil 26. Ensuite, à un instant t8, une seconde période de synchronisation commence. Dans ce cas, le signal comporte une partie négative 41 puis une partie positive 40. Ainsi, une intégration des deux parties fournit une valeur du signal 23 plus faible, à un instant t9, en fin d'intégration.

Par conséquent, même si le signal capacitif a une amplitude plus grande qu'un signal résistif, le déclenchement par un dispositif 12 n'est pas activé.

Même si entre les instants t7 et t8 le seuil 26 était dépassé, le dispositif ne produit pas de déclenchement grâce au circuit de temporisation 30.

Le signal 23 aurait aussi pu dépasser le seuil 26 dans l'intervalle de temps t7 à t9, mais le déclenchement du relais 7 n'aurait pas eu lieu grâce à la tempo 30.

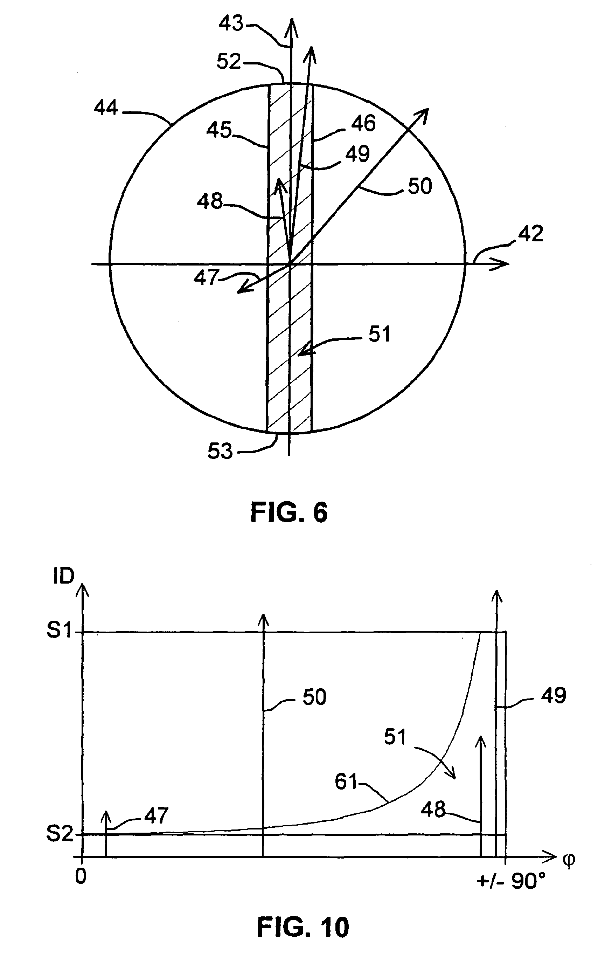

La figure 6 montre un diagramme de déclenchement et de non-déclenchement d'un dispositif selon un mode de réalisation de l'invention. Sur ce diagramme, la partie réelle ou résistive d'un courant différentiel est portée sur un axe horizontal 42, et la partie imaginaire ou réactive, par exemple capacitive ou inductive, est portée sur un axe vertical 43. Le premier seuil prédéterminé est, dans ce cas, représenté par un cercle 44. Il symbolise la comparaison à un seuil indépendant de la phase du courant. Le second seuil prédéterminé est représenté sur ce diagramme par deux lignes verticales 45 et 46 disposées de chaque côté et parallèlement à l'axe 43.

Quatre vecteurs 47, 48, 49 et 50 représentant des courants de défaut différentiels permettent d'illustrer quatre cas de fonctionnement d'un dispositif selon ce mode de réalisation de l'invention. Le vecteur 47 dépasse la ligne 45 mais ne dépasse pas le cercle 44, donc le dispositif de protection va déclencher par dépassement d'un second seuil 45 sensible à la partie résistive d'un courant de défaut. C'est le second dispositif de traitement 12 qui donne un signal de déclenchement. Le vecteur 48 a une longueur supérieure au vecteur 47 mais il ne dépasse pas les lignes 45 ou 46, ni le cercle 44. La composante résistive du vecteur 48 est faible, la composante capacitive est élevée mais elle ne dépasse pas le premier seuil représenté pour le cercle 44.

Par conséquent, un courant représenté par un vecteur 48 ne produit pas de déclenchement. Le vecteur 49 a une partie résistive faible qui ne dépasse pas les lignes 45 ou 46 mais comporte une partie capacitive très élevée. Ainsi, la longueur du vecteur étant supérieure à la longueur du rayon du cercle 44, le premier seuil sensible à l'amplitude du courant de défaut différentiel est dépassé. Il y a alors déclenchement par le premier dispositif de traitement. Le vecteur 50 dépasse la ligne 46 et le cercle 44, donc les premier et second seuils sont dépassés et les deux dispositifs de traitement donnent un signal de déclenchement.

Le non-déclenchement du dispositif de protection se trouve dans une zone 51 limitée par les lignes 45 et 46 pour la partie résistive du courant de défaut et par des arcs de cercles 52 et 53 reliant les lignes 45 et 46 pour la partie imaginaire ou réactive du courant de défaut. Cette zone 51 de non-déclenchement est hachurée dans le diagramme de la figure 6. En dehors de cette zone 51 un déclenchement se produit. Le fonctionnement dans la partie gauche ou droite de l'axe 43 dépend des sens de passage des fils N et P dans le tore 4 par rapport au raccordement du détecteur de signe sur le réseau 3.

Le fonctionnement dans la partie gauche ou droite de l'axe 43 dépend aussi des sens de passage des fils N et P dans le tore 4 par rapport au raccordement du détecteur de signe sur le réseau 3.

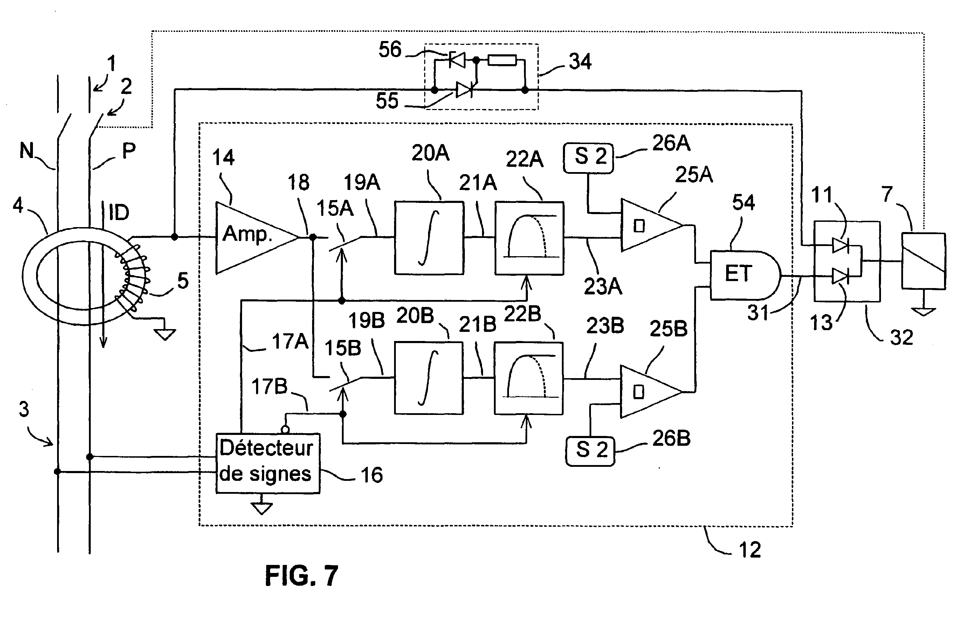

La figure 7 montre un troisième mode de réalisation de l'invention. Ce mode de réalisation présente l'avantage de détecter, de manière sûre et rapide, la présence de défauts différentiels résistifs. De plus, ce mode de réalisation permet un temps de déclenchement plus rapide, même lorsque le défaut a une apparition asymétrique ou décalée par rapport à la tension du réseau.

Le second dispositif de traitement 12 de la figure 7 comporte un premier détecteur synchrone représenté par un premier interrupteur 15A commandé par un premier signal 17A fourni par le détecteur de signe 16, et un second interrupteur 15B commandé par un second signal 17B fourni par ledit détecteur 16, ledit second signal étant complémentaire audit premier signal fourni par le détecteurl6.

Ainsi, le premier interrupteur 15A reçoit le signal 18 fourni par l'amplificateur 14 et fournit un signal découpé 19A à un intégrateur 20A. Un signal intégré 21A est alors mémorisé dans un bloqueur 22A qui fournit un signal 23A à un comparateur 25A.

Le second interrupteur 15B reçoit aussi le signal 18 et découpe de manière complémentaire ou entrelacée ledit signal 18. L'interrupteur 15B fournit un signal découpé 19B à un intégrateur 20B, puis un signal intégré 21B est fourni par l'intégrateur à un bloqueur 22B qui fournit un signal 23B à un comparateur 25B.

Les comparateurs 25A et 25B comparent respectivement les signaux 23A et 23B à des seuils respectivement 26A et 26B. Les sorties des comparateurs sont connectées à une porte ET 54 qui fournit un signal de déclenchement 31 lorsque les deux comparateurs ont détecté un dépassement de seuil.

Dans ce mode de réalisation, si deux alternances ou demi-périodes d'un courant de défaut différentiel résistif sont présentes successivement, le deuxième dispositif de traitement donne un ordre de déclenchement. Avantageusement, le circuit 30 de temporisation n'est plus nécessaire pour éliminer les déclenchements indésirables.

Le premier circuit de traitement, selon un mode de réalisation représenté sur la figure 7, comporte un composant 34 à seuil de tension composé d'un thyristor 55 connecté entre l'enroulement 5 et le relais 7 à travers la diode 11. Le thyristor 55 est déclenché par une diode de type zener 56 ayant un seuil de tension qui participe à la valeur du premier seuil de déclenchement du premier dispositif de traitement.

Le circuit de sélection 32 fait un OU à diodes avec les diodes 11 et 13 pour fournir au relais 7 les signaux de déclenchement du premier et du second dispositif de traitement.

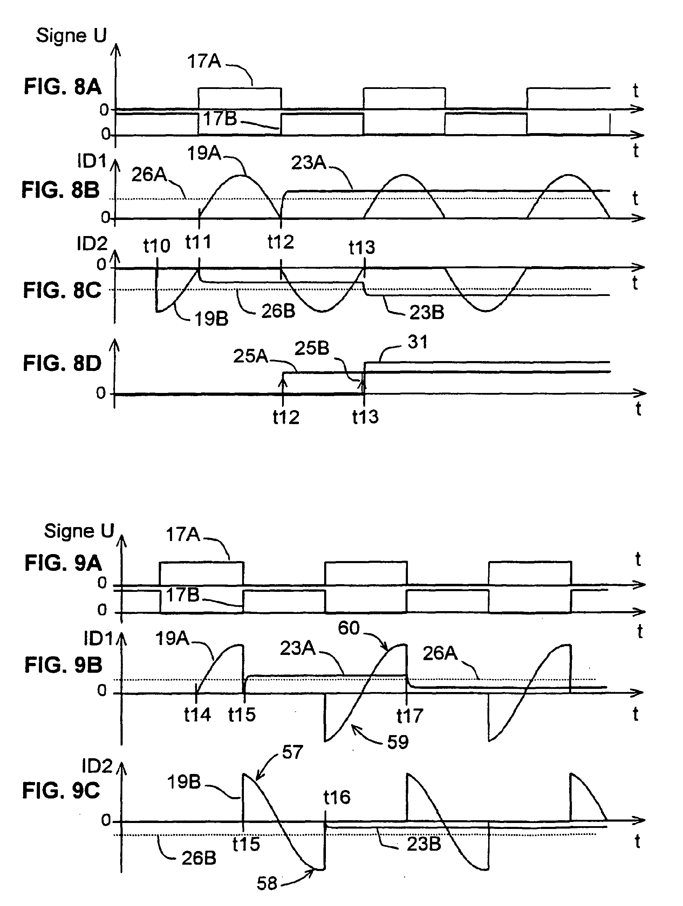

Les figures 8A à 8D illustrent des signaux d'un dispositif selon la figure 7 dans un cas de déclenchement par un second dispositif de traitement 12. La figure 8A montre des signaux 17A et 17B de synchronisation et de commande de découpage des interrupteurs respectivement 15A et 15B. La figure 8B montre un signal découpé 19A, un signal bloqué 23A et un signal de seuil 26A. La figure 8C montre un signal 19B découpé de manière complémentaire ou entrelacée par rapport au signal 19A, un signal bloqué 23B et un signal de seuil 26B. La figure 8D montre les sorties des comparateurs 25A et 25B et un signal de déclenchement 31 produit par le second dispositif de traitement 12.

Sur la figure 8B, à un instant t10, un défaut différentiel représenté par le signal 19B apparaît sensiblement au milieu du découpage opéré par le signal 17B. Le signal est intégré jusqu'à la fin de la demi-période de découpage représentée par un instant t11. Ensuite, à partir de cet instant t11, le signal d'intégration est bloqué et prend l'allure du signal 23B. Ce signal 23B étant inférieur au seuil 26B, le comparateur 25B ne bascule pas. Sur la figure 8B, à l'instant t11, une demi-alternance 19A est sensiblement complète, le signal de défaut est donc essentiellement résistif. Le signal 19A est intégré jusqu'à un instant t12, puis un signal de blocage 23A représentant la valeur à la fin du signal d'intégration, est comparé au seuil 26A. Le comparateur 25A bascule alors dans un état représentatif d'un dépassement de seuil (figure 8D). Entre l'instant t12 et un instant t13, un signal 19B a une alternance quasi complète. Ce signal est intégré et, à l'instant t13, la valeur d'intégration du signal bloqué 23B, dépasse le seuil 26B en valeur négative. Le comparateur 25B bascule dans sa position représentative d'un dépassement de seuil. Puisque le signal 23A était maintenu bloqué, les deux comparateurs sont basculés et la porte ET 54 ayant ses deux entrées actives fournit un signal de déclenchement 31 (figure 8D).

Dans ce cas, le déclenchement se produit après une durée correspondant à sensiblement deux alternances ou demi-période du réseau, soit un peu plus que ladite période. Si la fréquence du réseau est de 50 Hz, le temps de déclenchement est dans ce cas un peu supérieur à 20 ms.

Lorsqu'un courant de défaut est très fort, l'intégration d'une partie d'une alternance, comme entre les instants t10 et t11, peut faire dépasser le seuil. Dans ce cas, le temps de déclenchement peut être encore plus court, par exemple, supérieur à la durée d'une alternance et inférieur à la durée de deux alternances, soit inférieur à la durée d'une période complète. Dans tous les cas, le déclenchement sera supérieur à la durée d'une alternance ou d'une demi-période car il faut des signaux de deux alternances consécutives pour déclencher.

Si le signal de défaut ne dure qu'une alternance, il n'y a pas de déclenchement. Ainsi, les défauts transitoires ne produisent pas de déclenchements indésirables.

Les figures 9A, 9B et 9C illustrent des signaux selon la figure 7 dans un cas de non-déclenchement par un second dispositif de traitement 12. Le signal 18 représentant un signal de défaut comporte une forte composante capacitive et une faible composante résistive.

La figure 9A montre des signaux 17A et 17B complémentaires. La figure 9B illustre un signal 19A, un signal 23A et un signal de seuil 26A. La figure 9C illustre un signal 19B, un signal 23B et un signal 26B.

A un instant t14, un signal 19A apparaît pendant la durée de commande de découpage du signal 17A. Le signal 19A est intégré jusqu'à un instant t15 de fin de découpage et d'intégration. A cet instant tl 5, le signal d'intégration est bloqué et sa valeur est gardée par un signal 23A. Puisque le signal 19A avait une polarité unique, dans ce cas positive, le signal 23A est supérieur au seuil 26A et le comparateur 25A bascule en détection de dépassement de seuil.

A partir de l'instant t15, le signal 18 est découpé pour donner un signal 19B. Ce signal à forte composante capacitive comporte une partie positive 57 et une partie négative 58. Ces parties 57 et 58 se compensent par l'intégration du signal 19B et la valeur bloquée 23B en fin d'intégration à un instant t16 est faible et ne dépasse pas le seuil 26B en valeur négative. Donc, le comparateur 25B ne bascule pas en détection de dépassement de seuil. Ensuite, entre l'instant tl6 et un instant t17, le signal découpé 19A a aussi deux parties 59 et 60 de polarités différentes. En fin d'intégration (instant t17) le signal de blocage 23A prend une nouvelle valeur, inférieure au seuil 26A. Dans ce cas, le comparateur 25A rebascule en position de non-détection de seuil.

Dans le cycle des figures 9A à 9C un seul comparateur a momentanément basculé en dépassement de seuil, donc la porte ET 54 n'a pas donné de signal de déclenchement.

Les signaux 19A et 19B peuvent donner des signaux 23A et 23B aussi bien négatifs que positifs. Par conséquent, les comparateurs 25A et 25B sont de préférence des comparateurs à fenêtre qui basculent si le dépassement de seuil se produit en valeurs absolues, par exemple, supérieur à un seuil positif pour signal positif ou inférieur à un seuil négatif pour un signal négatif. Un mode de réalisation d'un tel comparateur est donné par exemple dans l'association des comparateurs 25 et 27 de la figure 3. D'autres solutions peuvent consister à redresser les signaux 23A et 23B avant d'êtres appliqués à des comparateurs 25A et 25B.

Dans des dispositifs selon des modes de réalisation de l'invention, lorsque les courants comportent des composantes résistives et réactives (capacitive ou inductives), le seuil de déclenchement varie selon ces composantes. La figure 10 montre une courbe 61 représentative de la variation du seuil de déclenchement en fonction du déphasage du courant de défaut par rapport à la tension, le déphasage étant représentatif des composantes du courant notamment des parties réelles et imaginaires ou résistives ou réactives.

Lorsque le courant est uniquement résistif, le seuil de déclenchement est égal au dépassement d'un seuil S2 représentatif du second seuil prédéterminé du second dispositif de traitement 12. Si le déphasage augmente, le seuil augmente également jusqu'à un premier seuil S1 qui peut être indépendant du déphasage, le seuil S1 étant représentatif du dépassement du premier seuil du premier dispositif de traitement.

Par exemple, le seuil S2 correspond aux lignes 45 et 46 et le seuil S1 correspond au cercle 44 de la figure 6. Ainsi la courbe 61 définit aussi une limite entre une zone de déclenchement partie supérieur et une zone de non-déclenchement 51 en partie inférieure de la courbe. Les vecteurs 47, 48, 49 et 50 sont également placés sur la figure 10 pour illustrer le fonctionnement.

Les dispositifs de protection différentielle décrits ci-dessus peuvent être réalisés avec des circuits électroniques, analogiques, numériques ou en combinaison. De plus, certaines fonctions peuvent être avantageusement réalisées sous une forme programmée, avec un microprocesseur ou un microcontrôleur associé à un convertisseur analogique-numérique.

Avantageusement les circuits 16 de détection de signe et le circuit d'alimentation 33 peuvent être isolés électriquement de la tension du réseau 3.

Les signaux représentés sur les figures 4A-C, 5A-C, 8A-D et 9A-C sont donnés à titre d'exemple pour illustrer des modes de réalisation de l'invention. Mais d'autres signaux peuvent aussi être représentatifs de signaux liés à des modes de réalisation de l'invention. De même la détection synchrone qui est réalisée par un interrupteur commandé peut être réalise par d'autres moyens de détection synchrone.

## Revendications

1. Dispositif de protection différentielle comportant :
- des moyens de mesure de courant différentiel (4, 5) pour fournir un signal (ID) représentatif d'un courant différentiel circulant dans des conducteurs d'un réseau électrique (1,3),
- une unité de traitement (6) connectée aux moyens de mesure et fournissant un signal de déclenchement lorsqu'un courant différentiel dépasse un seuil prédéterminé, et
- des moyens actionneurs (7) connectés à l'unité de traitement pour recevoir un signal de déclenchement,
dispositif **caractérisé en ce que** l'unité de traitement comporte :
- des premiers moyens de traitement (11, 7, 34, 35) recevant un signal représentatif du courant différentiel (ID) et fournissant un signal de déclenchement lorsque l'amplitude dudit courant différentiel dépasse un premier seuil prédéterminé (7, 34, 39, 56, S1, 44), et
- des seconds moyens de traitement (12) recevant un signal représentatif du courant différentiel (ID) et fournissant un signal de déclenchement (31) lorsque la composante résistive du courant différentiel dépasse un second seuil prédéterminé (26, 28, 26A, 26B, 45, 46, S2), le second seuil prédéterminé étant inférieur au premier seuil prédéterminé.

2. Dispositif de protection différentielle selon la revendication 1, **caractérisé en ce que** les premiers moyens de traitement comportent des circuits électroniques (34, 55, 56, 7) pour fonctionner à propre courant, et les seconds moyens de traitement comportent des circuits électroniques pour fonctionner avec une alimentation électrique fournie par un circuit d'alimentation (33).

3. Dispositif de protection différentielle selon l'une des revendications 1 ou 2, **caractérisé en ce que** l'unité de traitement comporte des moyens de sélection (32) connectés entre les premiers et seconds moyens de traitement et les moyens actionneurs (7) pour sélectionner les signaux de déclenchement fournis par lesdits premiers et les seconds moyens de traitement.

4. Dispositif de protection différentielle selon l'une quelconque des revendications 1 à 3, **caractérisé en ce que** les seconds moyens de traitement comportent :
- des premiers moyens de détection synchrone (15, 15A, 16) recevant un signal (18) représentatif du courant différentiel et un signal représentatif d'une tension des conducteurs du réseau électrique,
- des premiers moyens d'intégration (20, 20A) connectés aux premiers moyens de détection synchrone, et
- des premiers moyens comparaison (24, 25, 25A, 27) connectés aux moyens intégrateurs pour comparer des signaux fournis par les moyens intégrateurs avec au moins une valeur de second seuil prédéterminé (26, 26A, 28).

5. Dispositif de protection différentielle selon la revendication 4, **caractérisé en ce que** les moyens de détection synchrone comportent des moyens de détection de signe (16) pour détecter le signe d'un signal représentatif d'une tension des conducteurs du réseau électrique.

6. Dispositif de protection différentielle selon l'une des revendications 4 ou 5, **caractérisé en ce** les seconds moyens de traitement comportent :
- des seconds moyens de détection synchrone (15B, 16) recevant un signal représentatif du courant différentiel et un signal représentatif d'une tension des conducteurs du réseau électrique,
- des seconds moyens d'intégration (20B) connectés aux seconds moyens de détection synchrone, et
- des seconds moyens de comparaison (25B) connectés aux seconds moyens intégrateurs pour comparer des signaux fournis par les seconds moyens intégrateurs avec au moins une valeur de second seuil prédéterminé (26B).

7. Dispositif de protection différentielle selon l'une quelconque des revendications 4 à 6, **caractérisé en ce que** les seconds moyens de traitement comportent des moyens de blocage de signal connectés entre des moyens d'intégration (20, 20A, 20B) et des moyens de comparaison (24, 25, 27, 25A, 25B).

8. Dispositif de protection différentielle selon l'une des revendications 6 ou 7, **caractérisé en ce que** les premiers et les seconds moyens de détection synchrones (15A, 15B, 16) fonctionnent alternativement de manière entrelacée selon le signe (17A, 17B) d'un signal représentatif d'une tension des conducteurs du réseau électrique.

9. Dispositif de protection différentielle selon l'une quelconque des revendications 6 à 8" **caractérisé en ce que** les seconds moyens de traitement comportent des moyens de contrôle (54) connectés aux premiers et seconds moyens de comparaison (25A, 25B) et comportant une sortie fournissant un signal de déclenchement (31) lorsque lesdits premiers et seconds moyens de comparaison détectent un dépassement de seuil.

10. Dispositif de protection différentielle selon l'une quelconque des revendications 1 à 9, **caractérisé en ce que** les premiers et les seconds moyens de traitement comportent un seuil de déclenchement variable (61) en fonction du déphasage d'un courant de défaut différentiel par rapport à un signal représentatif d'une tension des conducteurs du réseau électrique, le seuil de déclenchement variable pouvant varier entre le second seuil prédéterminé (S2, 45, 46, 26, 28, 26A, 26B) et le premier seuil prédéterminé (S1, 34, 39, 44).

## Claims

1. A differential protection device comprising:
- means for measuring differential current (4, 5) to provide a signal (ID) representative of a differential current flowing in conductors of an electric power system (1, 3),
- a processing unit (6) connected to the means for measuring and providing a trip signal when a differential current exceeds a preset threshold and
- actuating means (7) connected to the processing unit to receive a trip signal,
a device **characterized in that** the processing unit comprises:
- first processing means (11, 7, 34, 35) receiving a signal representative of the differential current (ID) and providing a trip signal when the amplitude of said differential current exceeds a preset first threshold (7, 34, 39, 56, S1, 44) and
- second processing means (12) receiving a signal representative of the differential current (ID) and providing a trip signal (31) when the resistive component of the differential current exceeds a preset second threshold (26, 28, 26A, 26B, 45, 46, S2), the preset second threshold being lower than the preset first threshold.

2. Differential protection device according to claim 1, **characterized in that** the first processing means comprise electronic circuits (34, 55, 56, 7) to operate in system-powered manner and the second processing means comprise electronic circuits to operate with an electric power supply provided by a power supply circuit (33).

3. Differential protection device according to one of claims 1 or 2, **characterized in that** the processing unit comprises selection means (32) connected between the first and second processing means and the actuating means (7) to select the trip signals provided by said first and second processing means.

4. Differential protection device according to any one of claims 1 to 3, **characterized in that** the second processing means comprise:
- first synchronous detection means (15, 15A, 16) receiving a signal (18) representative of the differential current and a signal representative of a voltage of the electric power system conductors,
- first integrating means (20, 20A) connected to the first synchronous detection means and
- first comparison means (24, 25, 25A, 27) connected to the integrating means to compare signals provided by the integrating means with at least a second preset threshold value (26, 26A, 28).

5. Differential protection device according to claim 4, **characterized in that** the synchronous detection means comprise sign detection means (16) to detect the sign of a signal representative of a voltage of the electric power system conductors.

6. Differential protection device according to one of claims 4 or 5, **characterized in that** the second processing means comprise:
- second synchronous detection means (15B, 16) receiving a signal representative of the differential current and a signal representative of a voltage of the electric power system conductors,
- second integrating means (20B) connected to the second synchronous detection means and
- second comparison means (25B) connected to the second integrating means to compare signals provided by the second integrating means with at least a second preset threshold value (26B).

7. Differential protection device according to any one of claims 4 to 6, **characterized in that** the second processing means comprise signal blocking means connected between integrating means (20, 20A, 20B) and comparison means (24, 25, 27, 25A, 25B).

8. Differential protection device according to one of claims 6 or 7, **characterized in that** the first and second synchronous detection means (15A, 15B, 16) operate alternately in interleaved manner according to the sign (17A, 17B) of a signal representative of a voltage of the electric power system conductors.

9. Differential protection device according to any one of claims 6 to 8, **characterized in that** the second processing means comprise monitoring means (54) connected to the first and second comparison means (25A, 25B) and comprising an output providing a trip signal (31) when said first and second comparison means detect a threshold overshoot.

10. Differential protection device according to any one of claims 1 to 9, **characterized in that** the first and second processing means comprise a variable tripping threshold (61) according to the phase shift of a differential fault current with respect to a signal representative of a voltage of the electric power system conductors, the variable tripping threshold being able to vary between the preset second threshold (S2, 45, 46, 26, 28, 26A, 26B) and the preset first threshold (S1, 34, 39, 44).

## Patentansprüche

1. Differenzstrom-Schutzeinrichtung mit
- Differenzstrom-Messmitteln (4, 5) zur Lieferung eines Signals (ID), das einen über Leiter eines zu schützenden elektrischen Leitungsnetzes (1, 3) fließenden Differenzstrom abbildet,
- einer mit den Messmitteln verbundenen Verarbeitungseinheit (6), die ein Auslösesignal liefert, wenn ein Differenzstrom einen bestimmten Schwellwert überschreitet, und
- mit der Verarbeitungseinheit verbundenen Betätigungsmitteln (7) zur Beaufschlagung mit einem Auslösesignal,
welche Einrichtung **dadurch gekennzeichnet ist, dass** die Verarbeitungseinheit
- erste Verarbeitungsmittel (11, 7, 34, 35), die mit einem, den Differenzstrom (ID) abbildenden Signal beaufschlagt werden und ein Auslösesignal liefern, wenn die Amplitude des genannten Differenzstroms einen bestimmten ersten Schwellwert (7, 34, 39, 56, S1, 44) überschreitet, sowie
- zweite Verarbeitungsmittel (12) umfasst, die mit einem den Differenzstrom (ID) abbildenden Signal beaufschlagt werden und ein Auslösesignal (31) liefern, wenn der Wirkanteil des Differenzstroms einen bestimmten zweiten Schwellwert (26, 28, 26A, 26B, 45, 46, S2) überschreitet, wobei der bestimmte zweite Schwellwert unter dem bestimmten ersten Schwellwert liegt.

2. Differenzstrom-Schutzeinrichtung nach Anspruch 1, **dadurch gekennzeichnet, dass** die ersten Verarbeitungsmittel elektronische Schaltungen (34, 55, 56, 7) mit Betrieb durch Eigenstromversorgung und die zweiten Verarbeitungsmittel elektronische Schaltungen mit Betrieb durch eine, von einer Stromversorgungsschaltung (33) gelieferten Stromversorgung umfassen.

3. Differenzstrom-Schutzeinrichtung nach einem der Ansprüche 1 oder 2, **dadurch gekennzeichnet, dass** die Verarbeitungseinheit zwischen die ersten und zweiten Verarbeitungsmittel einerseits und die Betätigungsmittel (7) andererseits geschaltete Auswahlmittel (32) zur Auswahl der von den ersten und zweiten Verarbeitungsmitteln gelieferten Auslösesignale umfasst.

4. Differenzstrom-Schutzeinrichtung nach irgendeinem der Ansprüche 1 bis 3, **dadurch gekennzeichnet, dass** die zweiten Verarbeitungsmittel
- erste Synchron-Detektiermittel (15, 15A, 16), die mit einem den Differenzstrom abbildenden Signal (18) sowie mit einem eine Spannung zwischen den Leitern des elektrischen Leitungsnetzes abbildenden Signal beaufschlagt werden,
- mit den ersten Synchron-Detektiermitteln verbundene erste Integriermittel (20, 20A) sowie
- mit den Integriermitteln verbundene erste Vergleichsmittel (24, 25, 25A, 27) zum Vergleich von durch die Integriermittel gelieferten Signalen mit mindestens einem Wert eines bestimmten zweiten Schwellwerts (26, 26A, 28) umfassen.

5. Differenzstrom-Schutzeinrichtung nach Anspruch 4, **dadurch gekennzeichnet, dass** die Synchron-Detektiermittel Vorzeichen-Detektiermittel (16) zur Erkennung des Vorzeichens eines Signals umfassen, das eine Spannung zwischen den Leitern des elektrischen Leitungsnetzes abbildet.

6. Differenzstrom-Schutzeinrichtung nach irgendeinem der Ansprüche 4 oder 5, **dadurch gekennzeichnet, dass** die zweiten Verarbeitungsmittel
- zweite Synchron-Detektiermittel (15B, 16), die mit einem den Differenzstrom abbildenden Signal sowie mit einem eine Spannung zwischen den Leitern des elektrischen Leitungsnetzes abbildenden Signal beaufschlagt werden,
- mit den zweiten Synchron-Detektiermitteln verbundene zweite Integriermittel (20B) sowie
- mit den zweiten Integriermitteln verbundene zweite Vergleichsmittel (25B) zum Vergleich von durch die zweiten Integriermittel gelieferten Signalen mit mindestens einem Wert eines bestimmten zweiten Schwellwerts (26B) umfassen.

7. Differenzstrom-Schutzeinrichtung nach irgendeinem der Ansprüche 4 bis 6, **dadurch gekennzeichnet, dass** die zweiten Verarbeitungsmittel zwischen die Integriermittel (20, 20A, 20B) und die Vergleichsmittel (24, 25, 27, 25A, 25B) geschaltete Signal-Blockiermittel umfassen.

8. Differenzstrom-Schutzeinrichtung nach einem der Ansprüche 6 oder 7, **dadurch gekennzeichnet, dass** die ersten und die zweiten Synchron-Detektiermittel (15A, 15B, 16) in Abhängigkeit vom Vorzeichen (17A, 17B) eines eine Spannung zwischen den Leitern des elektrischen Leitungsnetzes abbildenden Signals überlappend arbeiten.

9. Differenzstrom-Schutzeinrichtung nach irgendeinem der Ansprüche 6 bis 8, **dadurch gekennzeichnet, dass** die zweiten Verarbeitungsmittel mit den ersten und zweiten Vergleichsmitteln (25A, 25B) verbundene Steuermittel (54) mit einem Ausgang umfassen, der ein Auslösesignal (31) liefert, wenn die genannten ersten und zweiten Vergleichsmittel eine Schwellwertüberschreitung erkennen.

10. Differenzstrom-Schutzeinrichtung nach irgendeinem der Ansprüche 1 bis 9, **dadurch gekennzeichnet, dass** die ersten und zweiten Verarbeitungsmittel einen in Abhängigkeit von der relativen Phasenlage eines Differenz-Fehlerstroms im Verhältnis zu einem, eine Spannung zwischen den Leitern des elektrischen Leitungsnetzes abbildenden Signals variablen Auslöse-Schwellwert (61) umfassen, wobei der variable Auslöse-Schwellwert zwischen dem Wert des bestimmten zweiten Schwellwerts (S2, 45, 46, 26, 28, 26A, 26B) und dem Wert des bestimmten ersten Schwellwerts (S1, 34, 39, 44) variieren kann.
